# EUROPEAN PATENT APPLICATION

(11) **EP 3 409 976 A1**
(43) Date of publication of application: **05.12.2018**
(21) Application number: 18174885.6
(22) Date of filing: 29.05.2018
(51) Int. Cl.: F16H 25/24, B62D 5/04, F16H 55/17, F16H 55/48, F16H 25/20, F16H 25/22

(54) **STEERING SYSTEM**

(30) Priority: 31.05.2017 JP 2017107392
(71) Applicant: JTEKT CORPORATION, Osaka-shi, Osaka 542-8502 (JP)
(72) Inventor: TOMIKAWA, Takashi, Osaka-shi,, Osaka 542-8502 (JP)
(74) Representative: Winter, Brandl, Fürniss, Hübner, Röss, Kaiser, Polte - Partnerschaft mbB

(57) **Abstract**

There is provided a steering system that is capable of suppressing backlash of a pulley and a reduction in strength due to temperature variations even if the pulley which is made of a resin is externally fitted with a nut member made of metal. A steering system (1) includes: a rack shaft (2) that is movable to be advanced and retracted in the axial direction; a cylindrical nut member (5) made of metal and threadably engaged with a spiral screw groove (21) formed in the outer peripheral surface of the rack shaft (2) via a plurality of balls (42); a pulley (6) made of a resin and externally fitted with the nut member (5) so as not to be rotatable relative to the nut member (5); a belt (90) wound around the pulley (6); an electric motor (40) that rotates the pulley (6) and the nut member (5) via the belt (90); and a retention ring (7), a plate spring portion (72) of which is disposed between the outer peripheral surface of the nut member (5) and the inner peripheral surface of the pulley (6) in an elastically deformed state. The retention ring (7) presses a second planar portion (6a) formed on the inner peripheral surface of the pulley (6) radially outward using a restoring force of the plate spring portion (72).

## Description

### BACKGROUND OF THE INVENTION

### 1. Field of the Invention

The present invention relates to a steering system of a vehicle, and particularly relates to a steering system in which a moving force in the axial direction is applied to a steered shaft, in which a ball screw groove is formed, through rotation of a nut member to which torque of an electric motor is transferred via a belt and a pulley.

### 2. Description of the Related Art

There has hitherto been a steering system of a vehicle, in which a moving force in the axial direction is applied to a steered shaft, in which a ball screw groove is formed, through rotation of a nut member to which torque of an electric motor is transferred via a belt and a pulley. The electric motor is supplied with a current that matches torque generated on a steering shaft coupled to a steering wheel from a controller to generate torque. When the nut member is rotated by the torque of the electric motor, a moving force in the axial direction is applied to the steered shaft to assist a driver in performing a steering operation with the steering wheel.

U.S. Patent Application Publication No. 2014/0090921 describes a steering system in which a tubular pulley made of a resin is disposed on the outer peripheral side of a nut member made of metal. A belt is wound around the outer periphery of the pulley. A plurality of teeth formed on each of the pulley and the belt are meshed with each other so that a rotational force is transferred from the belt to the pulley. A projection of the pulley is engaged with a recess formed at one location of the nut member in the circumferential direction so that the nut member and the pulley are not rotatable relative to each other. In addition, axial movement of the pulley with respect to the nut member is restricted by a retainer fitted with an annular groove formed in the outer peripheral surface of the nut member.

Japanese Patent Application Publication No. 2017-1506 (JP 2017-1506 A) describes a steering system in which a pulley made of a resin is formed integrally with the outer periphery of an annular core metal, the core metal being fixed to the outer periphery of a nut member. A belt is wound around the outer periphery of the pulley so that torque of an electric motor is transferred from the belt to the pulley and further to the nut member via the core metal.

The steering systems configured as discussed above, in which the pulley is made of a resin, have a light weight and generate reduced noise. On the other hand, however, the following problems may be caused by variations in temperature in an engine compartment, for example, because of the difference in coefficient of thermal expansion between the resin and the metal.

That is, in the steering system described in U.S. Patent Application Publication No. 2014/0090921, which is structured such that a tubular pulley made of a resin is disposed at the outer periphery of a nut member and relative rotation between the nut member and the pulley is restricted through fitting of the recess and the projection, the pulley may be expanded at a proportion that is higher than that of the nut member when the temperature rises, which may cause backlash of the pulley and generate noise and vibration during rotation of the electric motor. Meanwhile, in the steering system described in JP 2017-1506 A, which is structured such that a pulley made of a resin is formed integrally with a core metal fixed to the outer periphery of a nut member, a stress may be generated when the temperature rises or lowers because of the difference in coefficient of thermal expansion between the nut member and the pulley, which may reduce the strength of the pulley.

### SUMMARY OF THE INVENTION

It is an object of the present invention to provide a steering system that is capable of suppressing backlash of a pulley and a reduction in strength due to temperature variations even if the pulley which is made of a resin is externally fitted with a nut member made of metal so as not to be rotatable relative to the nut member.

An aspect of the present invention provides a steering system including: a steered shaft that is movable to be advanced and retracted in an axial direction; a cylindrical nut member made of metal and threadably engaged with a spiral screw groove formed in an outer peripheral surface of the steered shaft via a plurality of balls; a pulley made of a resin and externally fitted with the nut member so as not to be rotatable relative to the nut member; a belt wound around the pulley; an electric motor that rotates the pulley and the nut member via the belt; and an elastic member, at least a part of which is disposed between an outer peripheral surface of the nut member and an inner peripheral surface of the pulley in an elastically deformed state, in which the elastic member presses the inner peripheral surface of the pulley radially outward using a restoring force of the at least part of the elastic member in the elastically deformed state.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 illustrates the appearance of a steering system according to an embodiment of the present invention;
FIG. 2 is a schematic view schematically illustrating the structure inside a housing of the steering system;
FIG. 3 is a sectional view illustrating the configuration of an essential portion of the steering system;
FIG. 4 is a sectional view illustrating an assembly composed of a nut member, a pulley, and a retention ring;
FIG. 5 is a perspective view of the nut member, the pulley, and the retention ring;
FIG. 6 illustrates the assembly as seen from one side in the axial direction;
FIG. 7 illustrates the nut member and the pulley before the retention ring is mounted as seen from one side in the axial direction;
FIG. 8A is a plan view illustrating the retention ring in a natural state; and
FIG. 8B is a sectional view taken along the line C-C of FIG. 8A.

### DETAILED DESCRIPTION OF EMBODIMENTS

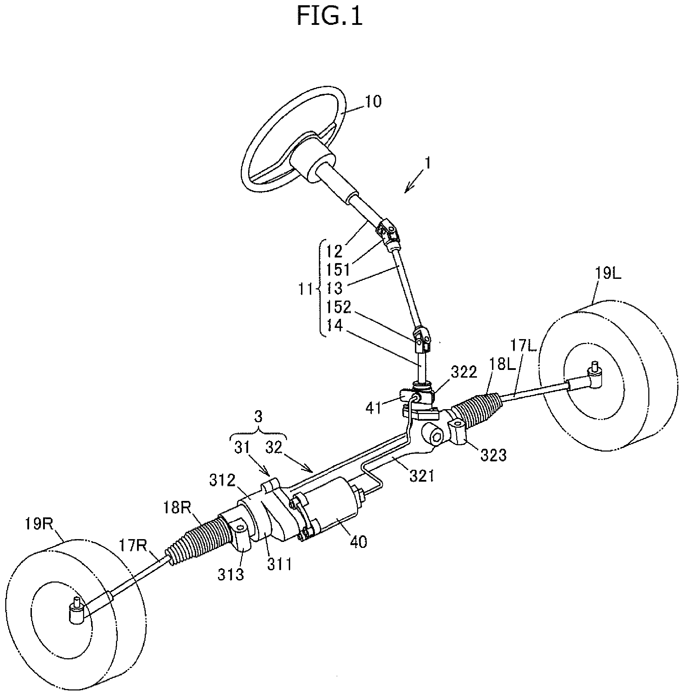

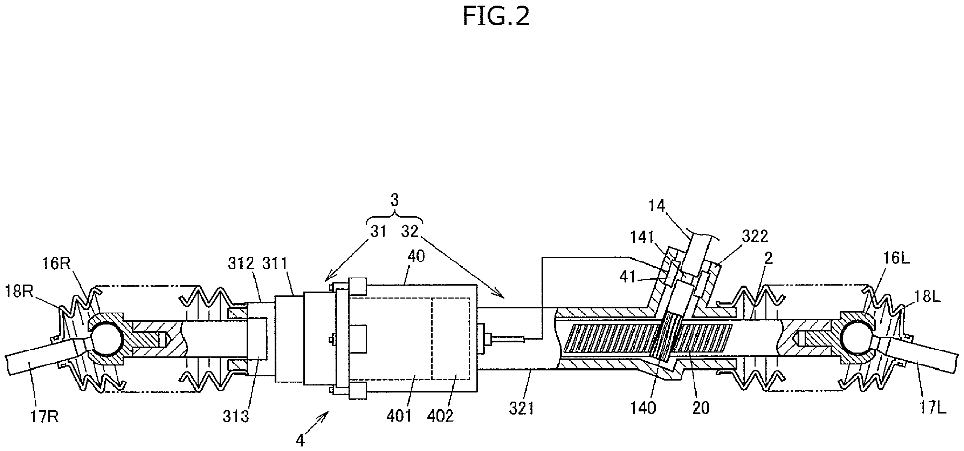

A steering system according to an embodiment of the present invention will be described below with reference to the drawings. A steering system 1 is mounted on a vehicle, and steers right and left front wheels that serve as steered wheels in response to a steering operation by a driver. FIG. 1 illustrates a state in which the steering system is seen from an oblique front side of the vehicle, with the left side of the drawing corresponding to the right side of the vehicle and with the right side of the drawing corresponding to the left side of the vehicle. The letter "R" attached to the reference numerals in FIGS. 1 and 2 indicates the right side of the vehicle, and the letter "L" indicates the left side of the vehicle. In the following description, the terms "upper", "lower", "right", and "left" indicate the "upper", "lower", "right", and "left" sides, respectively, of the vehicle.

The steering system 1 includes: a steering shaft 11 to which a steering wheel 10 to be subjected to a steering operation by the driver is coupled; a rack shaft 2 that serves as a steered shaft that is movable to be advanced and retracted in the axial direction along the vehicle width direction in response to the steering operation on the steering wheel 10; a housing 3 that houses the rack shaft 2; an electric motor 40 fixed to the housing 3; and a moving force application mechanism 4 driven by the electric motor 40 to apply a moving force in the axial direction to the rack shaft 2.

The housing 3 houses the moving force application mechanism 4 and a part of the rack shaft 2. The electric motor 40 and the moving force application mechanism 4 constitute a steering assist device 100 that assists the driver in performing a steering operation on the steering wheel 10. In the steering system 1, the rack shaft 2 is moved in the axial direction to steer right and left front wheels 19R and 19L that serve as the steered wheels. In FIG. 1, the front wheels 19R and 19L are indicated by imaginary lines (long dashed double-short dashed lines).

The steering shaft 11 has: a column shaft 12, one end portion of which is coupled to the steering wheel 10; an intermediate shaft 13 coupled to the column shaft 12 via a universal joint 151; and a pinion shaft 14 coupled to the intermediate shaft 13 via a universal joint 152. The universal joints 151 and 152 are each constituted of a Cardan joint, for example.

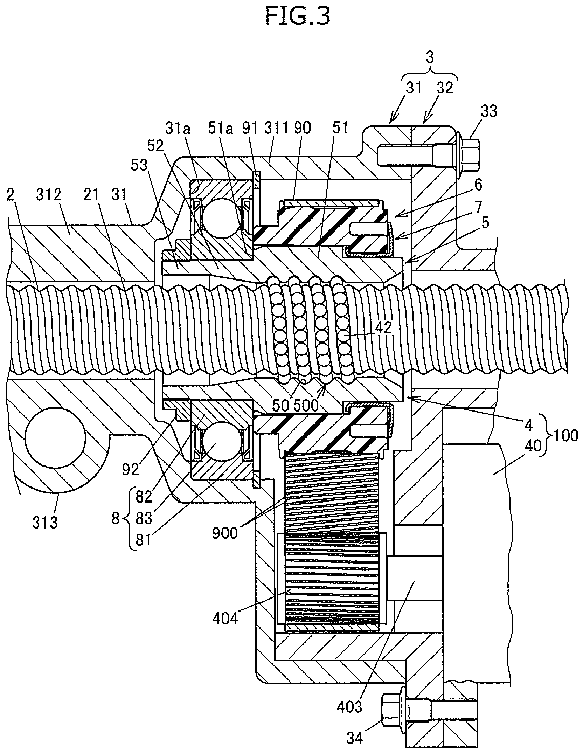

Pinion teeth 140 (see FIG. 2) are formed at the distal end portion of the pinion shaft 14. The rack shaft 2 is formed with rack teeth 20 to be meshed with the pinion teeth 140 and a spiral screw groove 21 (see FIG. 3). A part of the pinion shaft 14 is constituted as a flexible torsion bar 141 that is warped by steering torque applied to the steering wheel 10. The warp angle of the torsion bar 141 is detected by a torque sensor 41. The torque sensor 41 detects the steering torque in accordance with the magnitude of the warp angle of the torsion bar 141.

The rack shaft 2 is coupled to the right and left front wheels 19R and 19L via link mechanisms that include right and left tie rods 17R and 17L, respectively, and knuckle arms (not illustrated). Bellows 18R and 18L that each have an expandable bellows structure are provided between both end portions of the housing 3 and the tie rods 17R and 17L, respectively. As illustrated in FIG. 2, first end portions of the right and left tie rods 17R and 17L are coupled to both end portions of the rack shaft 2 via ball joints 16R and 16L, respectively. When the rack shaft 2 is moved to be advanced and retracted in the vehicle width direction (right-left direction), the right and left front wheels 19R and 19L are steered by the right and left tie rods 17R and 17L, respectively.

The moving force application mechanism 4 has: a cylindrical nut member 5 threadably engaged with the screw groove 21, which is formed in the outer peripheral surface of the rack shaft 2, via a plurality of balls 42; a driven pulley 6 made of a resin and externally fitted with the nut member 5 so as not to be rotatable relative to the nut member 5; a retention ring 7 that retains the driven pulley 6 with respect to the nut member 5; a bearing 8 that supports the nut member 5 so as to be rotatable with respect to the housing 3; and a belt 90 made of synthetic rubber and wound around the driven pulley 6.

As illustrated in FIG. 2, the electric motor 40 has: a drive portion 401 that has a stator and a rotor; and a control portion 402 that supplies a motor current to the stator of the drive portion 401. The control portion 402 supplies the drive portion 401 with a motor current that matches the steering torque which is detected by the torque sensor 41 or the vehicle speed. The drive portion 401 generates torque in accordance with the motor current which is supplied from the control portion 402, and rotates the nut member 5 and the driven pulley 6 with respect to the housing 3 via the belt 90. The belt 90 is a toothed belt, on the inner peripheral surface of which a plurality of belt teeth 900 are provided.

The housing 3 has a first member 31 and a second member 32. The first member 31 and the second member 32 are fastened to each other by a plurality of bolts 33. In FIG. 3, one of such bolts 33 is illustrated. The first member 31 has: a moving force application mechanism housing portion 311 that houses the moving force application mechanism 4; a first tubular portion 312 provided on the side of the right front wheel 19R with respect to the moving force application mechanism 4 to house the rack shaft 2; and a first attachment portion 313 for attachment to the vehicle body. The moving force application mechanism housing portion 311, the first tubular portion 312, and the first attachment portion 313 are integral with each other. The second member 32 has: a second tubular portion 321 provided on the side of the left front wheel 19L with respect to the moving force application mechanism 4 to house the rack shaft 2; a pinion shaft housing portion 322 that houses one end portion of the pinion shaft 14; and a second attachment portion 323 (see FIG. 1) for attachment to the vehicle body. The second tubular portion 321, the pinion shaft housing portion 322, and the second attachment portion 323 are integral with each other.

The first attachment portion 313 and the second attachment portion 323 are bolted to a steering member (not illustrated) of the vehicle body for attachment. In addition, the electric motor 40 is fixed to an end portion of the second member 32 on the side of the first member 31 by a plurality of bolts 34. In FIG. 3, one of such bolts 34 is illustrated.

A spiral screw groove 50 that faces the screw groove 21 of the rack shaft 2 is formed in the inner peripheral surface of the nut member 5. The plurality of balls 42 roll in a rolling passage 500 formed by the screw groove 21 of the rack shaft 2 and the screw groove 50 of the nut member 5. In addition, the nut member 5 is formed with a circulation passage (not illustrated) that opens at two locations of the rolling passage 500 and that circulates the balls 42 through the rolling passage 500. The balls 42 are circulated through the rolling passage 500 via the circulation passage by rotation of the nut member 5.

The belt 90 is wound between a drive pulley 404 coupled to a shaft 403 of the electric motor 40 and the driven pulley 6, and transfers a rotational force of the drive pulley 404 to the driven pulley 6. The driven pulley 6 is larger in diameter than the drive pulley 404 so that the rotational force of the drive pulley 404 is transferred to the driven pulley 6 with the speed of the rotational force reduced by the belt 90. The driven pulley 6 is an embodiment of the pulley of the invention according to the claims of the present invention. The driven pulley 6 will hereinafter be referred to simply as a "pulley 6".

The bearing 8 is a ball bearing in which a plurality of rolling elements 83 are disposed between an outer ring 81 and an inner ring 82. Axial movement of the outer ring 81 with respect to the housing 3 is restricted by a receiving surface 31a formed on the first member 31 of the housing 3 and a snap ring 91 fitted with the first member 31.

The nut member 5 is formed by cutting a base material made of steel, and has: a first tubular portion 51 with which the pulley 6 is externally fitted; a second tubular portion 52 with which the inner ring 82 is externally fitted; and an external thread portion 53, in the outer peripheral surface of which a spiral screw groove is formed. The first tubular portion 51, the second tubular portion 52, and the external thread portion 53 are integral with each other. The second tubular portion 52 is smaller in diameter than the first tubular portion 51. One side surface of the inner ring 82 abuts against an end surface 51a of the first tubular portion 51 on the side of the second tubular portion 52. The inner ring 82 is held between a lock nut 92 threadably fitted with the external thread portion 53 and the end surface 51a.

The nut member 5, which is made of a steel material, is less thermally expanded than the pulley 6, which is made of a resin. That is, the coefficient of thermal expansion of the pulley 6 is higher than the coefficient of thermal expansion of the nut member 5, and the pulley 6 is expanded at a proportion that is higher than that of the nut member 5 when the temperature is raised by heat exhausted from an engine, for example. A synthetic resin such as polyamide which has a high molding accuracy, good strength characteristics, and a high heat resistance, for example, can be suitably used as the resin material of the pulley 6. In addition, reinforced polyamide with enhanced strength obtained by compositing glass fibers may also be used as the material of the pulley 6. The pulley 6 does not have a core metal, and can be easily manufactured by injection molding, for example.

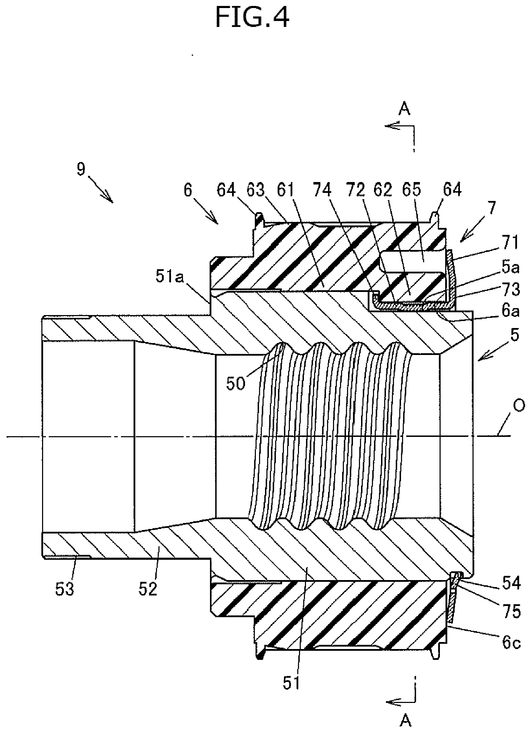

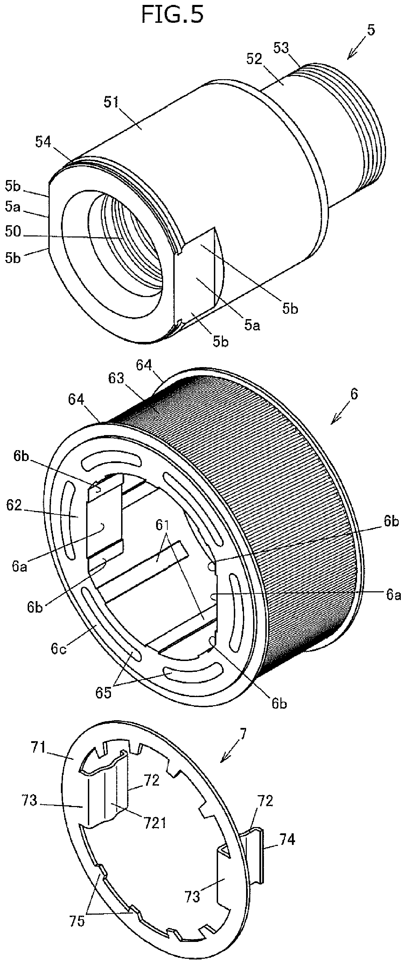

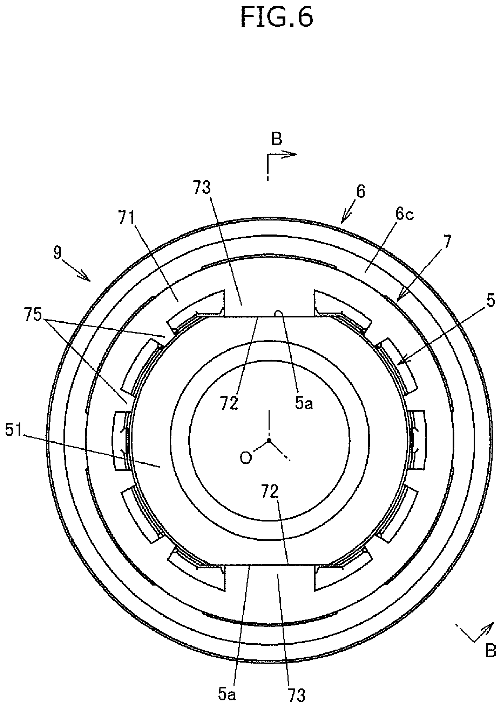

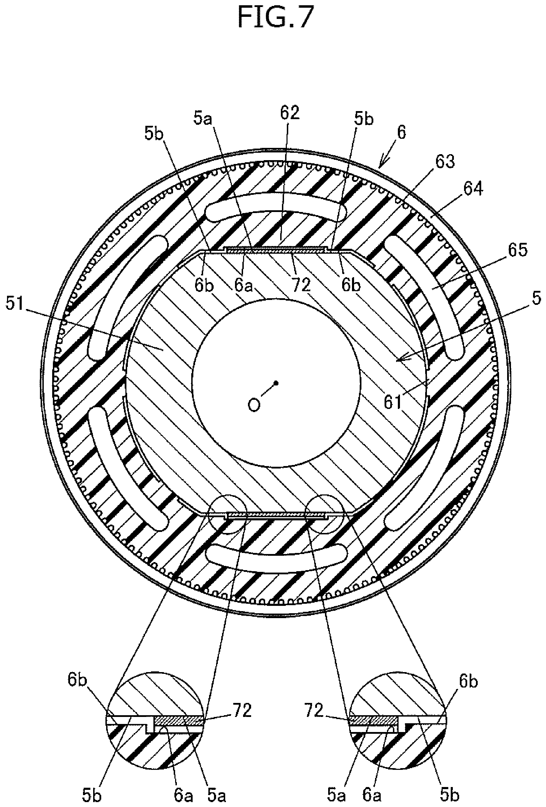

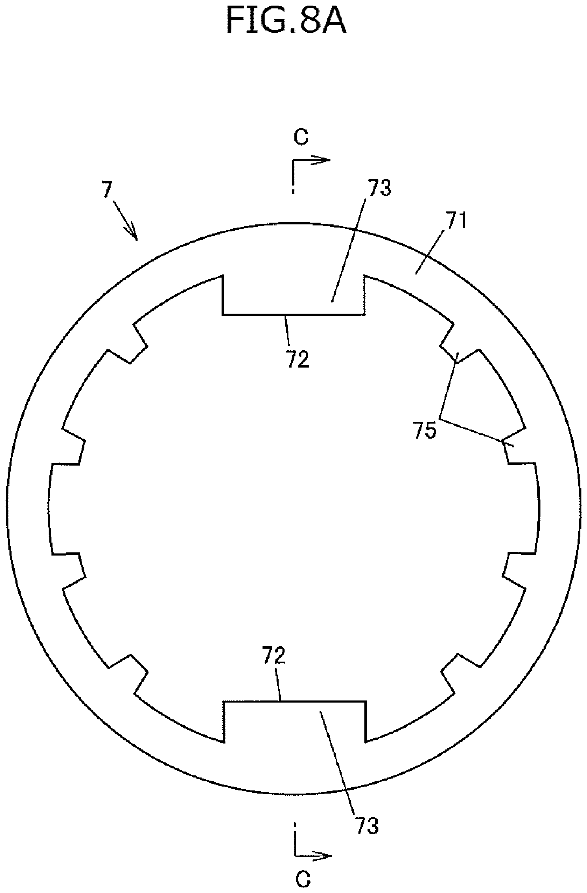

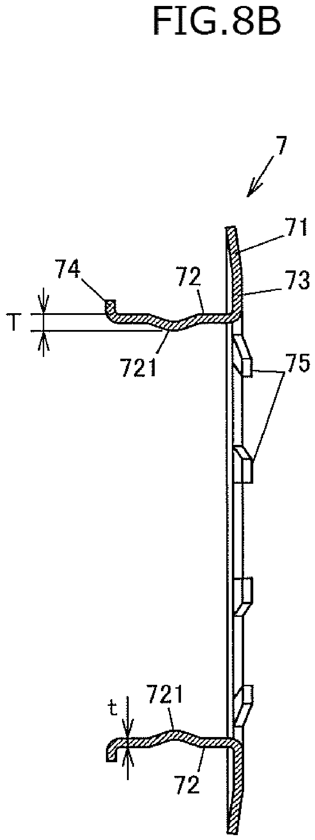

FIG. 4 is a sectional view illustrating an assembly 9 composed of the nut member 5, the pulley 6, and the retention ring 7, taken along a rotational axis O of the assembly 9. FIG. 5 is a perspective view of the nut member 5, the pulley 6, and the retention ring 7. FIG. 6 illustrates the assembly 9 as seen from one side in the axial direction. FIG. 7 is a cross-sectional view of the assembly 9, taken along the line A-A of FIG. 4. FIG. 8A is a plan view of the retention ring 7 in a natural state. FIG. 8B is a sectional view taken along the line C-C of FIG. 8A. FIG. 4 illustrates a sectional surface taken along the line B-B illustrated in FIG. 6. FIG. 7 illustrates a cross-sectional surface of the pulley 6 taken along a plane that is orthogonal to the axial direction. In FIG. 7, portions around both end portions, in the width direction, of one of a pair of plate spring portions 72 of the retention ring 7 are illustrated as enlarged.

The retention ring 7 has: a ring portion 71 formed in an annular shape; the pair of plate spring portions 72; connection portions 73 that connect between the ring portion 71 and the pair of plate spring portions 72; retention portions 74 provided continuously with end portions of the plate spring portions 72 on the opposite side from the ring portion 71 to be retained on the pulley 6; and a plurality of lug portions 75 that project radially inward from the ring portion 71. The retention ring 7 is an embodiment of the elastic member of the invention according to the claims of the present invention, and is formed by pressing a steel plate made of spring steel. In the present embodiment, the pair of plate spring portions 72 are provided at positions across the center of the ring portion 71. However, the present invention is not limited thereto, and the retention ring 7 may be provided with three or more plate spring portions 72, and may be provided with only one plate spring portion 72. That is, it is only necessary that the retention ring 7 should have at least one plate spring portion 72.

The ring portion 71 faces an axial end surface 6c of the pulley 6 on the opposite side from the bearing 8. The rack shaft 2 is inserted through the inside of the ring portion 71. An end portion of the ring portion 71 on the outer peripheral side elastically abuts against the axial end surface 6c of the pulley 6. A clearance is formed between an end portion of the ring portion 71 on the inner peripheral side and the axial end surface 6c. The pair of connection portions 73 and the plurality of lug portions 75 project radially inward from an end portion of the ring portion 71 on the inner peripheral side, and face the axial end surface 6c of the pulley 6. The retention portions 74 project radially outward from end portions of the plate spring portions 72 on the opposite side from the ring portion 71.

When a direction that is parallel to the rotational axis O is defined as a "length direction" and a direction that is orthogonal to the length direction is defined as a "width direction", a middle portion 721, in the length direction, of each of the plate spring portions 72 of the retention ring 7 is curved over the entire plate spring portion 72 in the width direction. In the present embodiment, the middle portions 721 of the plate spring portions 72 are curved inward (toward the nut member 5) with respect to the length direction.

The plate spring portions 72 are each disposed between a first planar portion 5a formed on the outer peripheral surface of the nut member 5 and a second planar portion 6a formed on the inner peripheral surface of the pulley 6. The plate spring portions 72 are each interposed between the first planar portion 5a and the second planar portion 6a to be compressed in the radial direction of the nut member 5 and the pulley 6. In the present embodiment, the middle portions 721 of the plate spring portions 72 are curved inward as discussed above. Thus, the middle portion 721 elastically contacts the first planar portion 5a, and both end portions of the plate spring portion 72 in the length direction, which interpose the middle portion 721, elastically contact the second planar portion 6a.

In a state in which the electric motor 40 is not generating torque, the clearance between the first planar portion 5a and the second planar portion 6a is smaller than a thickness T (see FIG. 8B) of the entire plate spring portion 72 determined in consideration of the curve of the middle portion 721, and larger than a plate thickness t of the steel plate of the plate spring portion 72. Therefore, the plate spring portion 72 is disposed between the outer peripheral surface of the nut member 5 and the inner peripheral surface of the pulley 6 in a state in which at least a part of the plate spring portion 72 is elastically deformed, and the retention ring 7 presses the inner peripheral surface of the pulley 6 radially outward using a restoring force of the elastically deformed portion. More specifically, the second planar portions 6a of the pulley 6 each always receive a force in the direction away from the first planar portion 5a.

The pulley 6 has a pair of second planar portions 6a on the inner peripheral surface thereof. The second planar portions 6a extend in parallel with and face each other in a state before the nut member 5 is disposed inside the pulley 6. The pulley 6 also has a pair of abutment surfaces 6b on the inner peripheral surface thereof on both sides, in the circumferential direction, of each of the second planar portions 6a. The pair of abutment surfaces 6b abut against abutment surfaces 5b of the nut member 5 to be discussed later. The second planar portion 6a and the pair of abutment surfaces 6b which interpose the second planar portion 6a extend in parallel with each other. The pair of abutment surfaces 6b project radially inward with respect to the second planar portion 6a.

In addition, the inner peripheral surface of the pulley 6 is provided with a plurality of ribs 61, the distal end portions of which contact the outer peripheral surface of the nut member 5. The ribs 61 extend along the axial direction of the pulley 6, and project radially inward with respect to the inner peripheral surface of the pulley 6 between the adjacent ribs 61. In the present embodiment, eight ribs 61 are provided at equal intervals in the circumferential direction of the pulley 6. The eight ribs 61 contact the outer peripheral surface of the nut member 5 at least in the case where the temperature of the pulley 6 is at or lower than the normal temperature.

The second planar portions 6a are formed as the distal end surfaces of projecting portions 62 provided so as to project further radially inward with respect to the ribs 61. Two ribs 61, out of the eight ribs 61, are continuous with the projecting portions 62. The projecting portions 62 are provided at one end portion of the pulley 6 on the opposite side from the bearing 8. The retention portions 74 of the retention ring 7 are retained on the projecting portions 62.

The outer peripheral surface of the pulley 6 is formed with: a plurality of pulley teeth 63 meshed with the belt teeth 900 of the belt 90; and a pair of weir portions 64 that restrict axial movement of the belt 90 with respect to the pulley 6. The plurality of pulley teeth 63 are formed as inclined with respect to the axial direction between the pair of weir portions 64. In addition, the pulley 6 is formed with a plurality of lightening portions 65 that open in the axial end surface 6c in order to achieve a weight reduction, prevent shrinkage during molding, and improve heat radiation. The lightening portions 65 each have an arcuate shape as seen from the side of the axial end surface 6c, and extend in the axial direction of the pulley 6. It should be noted, however, that the lightening portions 65 may not necessarily be formed.

The nut member 5 has a pair of first planar portions 5a on the outer peripheral surface thereof. The nut member 5 also has a pair of abutment surfaces 5b provided on both sides, in the circumferential direction, of each of the first planar portions 5a on the outer peripheral surface of the first tubular portion 51 to abut against the abutment surfaces 6b of the pulley 6. In the present embodiment, the pair of abutment surfaces 5b are formed continuously with the first planar portion 5a without a step therebetween so that the first planar portion 5a and the pair of abutment surfaces 5b are formed as one flat surface as a whole. The first tubular portion 51 has a width across flat shape in which two flat surfaces that each include the first planar portion 5a and the pair of abutment surfaces 5b are formed symmetrically with the rotational axis O serving as the axis of symmetry.

In addition, an engagement groove 54 that extends in the circumferential direction of the nut member 5 is formed in the outer peripheral surface of the first tubular portion 51 at an end portion on the opposite side from the second tubular portion 52, excluding portions at which the first planar portions 5a and the abutment surfaces 5b are formed. The engagement groove 54 is an embodiment of the recess to be engaged with the lug portions 75 of the retention ring 7.

In a state in which the electric motor 40 is not generating torque, the first planar portions 5a of the nut member 5 and the second planar portions 6a of the pulley 6 extend in parallel with each other across the plate spring portions 72 of the retention ring 7. In this state, the abutment surfaces 5b of the nut member 5 and the abutment surfaces 6b of the pulley 6 extend in parallel with and face each other via a predetermined clearance.

When a motor current is supplied to the drive portion 401 of the electric motor 40 in this state so that the electric motor 40 operates to generate torque, a rotational force of the drive pulley 404 is transferred to the pulley 6 via the belt 90. Then, the amount of deformation of the plate spring portion 72 of the retention ring 7 is increased at one end portion, in the width direction, of the plate spring portion 72 by the rotational force, which causes the abutment surfaces 5b and 6b on the side of the one end portion to abut against each other. Relative rotation between the nut member 5 and the pulley 6 is restricted by abutment between the abutment surfaces 5b and 6b. The electric motor 40 generates torque so as to apply a steering assist force in a direction that matches the steering direction of the steering wheel 10. Thus, the abutment surfaces 5b and 6b abut against each other on one side of the plate spring portion 72 in the case where the steering wheel 10 is steered in one direction (e.g. rightward). The abutment surfaces 5b and 6b abut against each other on the other side of the plate spring portion 72 in the case where the steering wheel 10 is steered in the other direction (e.g. leftward).

The plurality of lug portions 75 of the retention ring 7 are engaged with the engagement groove 54 in an elastically deformed state. The ring portion 71 is pressed against the axial end surface 6c of the pulley 6 by the restoring force of the plurality of lug portions 75. Movement of the pulley 6 relative to the nut member 5 toward one side in the axial direction, which is the direction away from the bearing 8, is restricted by the retention ring 7.

During assembly of the assembly 9, the plate spring portions 72 and the connection portions 73 of the retention ring 7 are elastically deformed to retain the retention portions 74 on the projecting portions 62 of the pulley 6. After that, the pulley 6 is externally fitted with the nut member 5 together with the retention ring 7. Then, the ring portion 71 of the retention ring 7 is pressed in the axial direction until an end portion of the ring portion 71 on the inner peripheral side abuts against the axial end surface 6c of the pulley 6. After that, the pressing force is released, which causes the distal end portions of the lug portions 75 to be engaged with the engagement groove 54. The bearing 8 may be fixed by the lock nut 92 after the pulley 6 and the retention ring 7 are assembled to the nut member 5, or may be fixed by the lock nut 92 before the pulley 6 and the retention ring 7 are assembled to the nut member 5.

The functions and the effects of the present embodiment will be described. In the present embodiment described above, the plate spring portions 72 of the retention ring 7 are disposed in an elastically deformed state between the first planar portions 5a of the nut member 5 and the second planar portions 6a of the pulley 6 which is externally fitted with the nut member 5, and the second planar portions 6a are pressed toward the radially outer side of the pulley 6 by the restoring force of the plate spring portions 72. Thus, backlash of the pulley 6 with respect to the nut member 5 in the radial direction is suppressed when the temperature rises even if the pulley 6, which is made of a resin, is externally fitted with the nut member 5, which is made of metal, so as not to be relatively rotatable. Consequently, it is possible to prevent generation of noise or vibration that is significant enough to be sensed by the driver or a passenger of the vehicle due to backlash of the pulley 6 during rotation of the electric motor 40.

In addition, the plate spring portions 72 of the retention ring 7 are disposed between the first planar portions 5a of the nut member 5 and the second planar portions 6a of the pulley 6, which are parallel to each other. Thus, the second planar portions 6a can be pressed toward the radially outer side of the pulley 6 over the entire plate spring portions 72 in the width direction, which makes it possible to reliably suppress backlash of the pulley 6 with respect to the nut member 5.

In addition, relative rotation between the nut member 5 and the pulley 6 is restricted by abutment between the abutment surfaces 5b and 6b which are provided on both sides, in the circumferential direction, of the first and second planar portions 5a and 6a, respectively. Thus, the plate spring portions 72 of the retention ring 7 are not collapsed excessively, and the elasticity of the plate spring portions 72 can be maintained appropriately. That is, if the plate spring portions 72 are compressed until the plate spring portions 72 become partially flat, the plate spring portions 72 may be plastically deformed and permanently strained not to be restored to their original shape even if the load is removed. In the present embodiment, however, such plastic deformation is prevented by the configuration described above.

In addition, the retention ring 7 has the ring portion 71 and the plurality of plate spring portions 72, which are integral with each other. Thus, the concentricity of the nut member 5 and the pulley 6 is enhanced compared to a case where the retention ring 7 has only one plate spring portion 72, for example, and the pulley 6 can be supported more stably on the nut member 5. In addition, the retention ring 7 has the ring portion 71 and the retention portions 74, which are integral with each other. Thus, the retention ring 7 can be assembled easily by externally fitting the pulley 6 with the nut member 5 with the retention portions 74 retained on the projecting portions 62 of the pulley 6 in advance.

In addition, the retention ring 7 has the lug portions 75 which are engaged with the engagement groove 54 of the nut member 5, and the ring portion 71 which contacts the axial end surface 6c of the pulley 6. Thus, the pulley 6 can be retained by the retention ring 7. That is, the retention ring 7 has a function of suppressing backlash of the pulley 6 and a function of retaining the pulley 6. Furthermore, the ring portion 71 of the retention ring 7 is elastically pressed against the axial end surface 6c of the pulley 6 by the restoring force of the lug portions 75 which are elastically deformed. Thus, the pulley 6 is held without a clearance between the inner ring 82 of the bearing 8 and the ring portion 71 of the retention ring 7, which stabilizes the position of the pulley 6 with respect to the nut member 5 in the axial direction.

The present invention can be modified, as appropriate, without departing from the scope and spirit of the present invention. For example, in the embodiment described above, the nut member 5 and the pulley 6 are formed with two first planar portions 5a and two second planar portions 6a, respectively. However, the present invention is not limited thereto, and the nut member 5 and the pulley 6 may be formed with three or more first planar portions 5a and three or more second planar portions 6a, respectively, for example. In this case, the retention ring 7 is provided with a number of plate spring portions 72, the number corresponding to that of the first and second planar portions 5a and 6a of the nut member 5 and the pulley 6, respectively. Consequently, backlash of the pulley 6 with respect to the nut member 5 in the radial direction is suppressed more reliably. It is desirable that the nut member 5 and the pulley 6 should be formed with a plurality of first and second planar portions 5a and 6a, respectively, at equal intervals along the circumferential direction.

## Claims

1. A steering system comprising:
a steered shaft that is movable to be advanced and retracted in an axial direction;
a cylindrical nut member made of metal and threadably engaged with a spiral screw groove formed in an outer peripheral surface of the steered shaft via a plurality of balls;
a pulley made of a resin and externally fitted with the nut member so as not to be rotatable relative to the nut member;
a belt wound around the pulley;
an electric motor that rotates the pulley and the nut member via the belt; and
an elastic member, at least a part of which is disposed between an outer peripheral surface of the nut member and an inner peripheral surface of the pulley in an elastically deformed state, wherein
the elastic member presses the inner peripheral surface of the pulley radially outward using a restoring force of the at least part of the elastic member in the elastically deformed state.

2. The steering system according to claim 1, wherein:
the elastic member has at least one plate spring portion disposed between a first planar portion formed on the outer peripheral surface of the nut member and a second planar portion formed on the inner peripheral surface of the pulley; and
the plate spring portion is interposed between the first and second planar portions to be compressed in a radial direction of the nut member and the pulley.

3. The steering system according to claim 2, wherein:
the nut member and the pulley have respective abutment surfaces that abut against each other because of an increase in amount of deformation of the plate spring portion during operation of the electric motor, and relative rotation between the nut member and the pulley is restricted with the abutment surface of the nut member and the abutment surface of the pulley abutting against each other; and
the nut member is provided with the abutment surface on both sides of the first planar portion in a circumferential direction, and the pulley is provided with the abutment surface on both sides of the second planar portion in the circumferential direction.

4. The steering system according to claim 2 or 3, wherein
the elastic member has a ring portion, through which the steered shaft is inserted, and the plate spring portion, the ring portion and the plate spring portion being integral with each other.

5. The steering system according to claim 4, wherein
the elastic member also has a retention portion provided continuously with an end portion of the plate spring portion on an opposite side from the ring portion to be retained on the pulley.

6. The steering system according to claim 4 or 5, wherein:
the ring portion of the elastic member is disposed to face an axial end surface of the pulley, the elastic member has a plurality of lug portions that project radially inward from the ring portion, the plurality of lug portions being integral with the ring portion, and the nut member has a recess to be engaged with the lug portions in an outer peripheral surface of the nut member; and
movement of the pulley relative to the nut member toward one side in the axial direction is restricted by the elastic member.

7. The steering system according to any one of claims 4 to 6, wherein
the plurality of lug portions of the elastic member are engaged with the recess in an elastically deformed state, and the ring portion of the elastic member is pressed against an axial end surface of the pulley by a restoring force of the plurality of lug portions.
